Europäisches Patentamt

European Patent Office

Office européen des brevets

(19)

(11) Veröffentlichungsnummer: **0 104 312**
**B1**

(12) **EUROPÄISCHE PATENTSCHRIFT**

(45) Veröffentlichungstag der Patentschrift:
**13.07.88**

(21) Anmeldenummer: **83104613.1**

(22) Anmeldetag: **11.05.83**

(51) Int. Cl.⁴: **B 60 T  13/26**, B 60 T  13/58

(54) **Druckluftbremsanlage.**

(30) Priorität: **28.08.82  DE 3232127**

(43) Veröffentlichungstag der Anmeldung:
**04.04.84 Patentblatt 84/14**

(45) Bekanntmachung des Hinweises auf die Patenterteilung:
**13.07.88 Patentblatt 88/28**

(84) Benannte Vertragsstaaten:
**AT CH DE FR GB IT LI SE**

(56) Entgegenhaltungen:
**DE - A - 2 227 778**
**DE - A - 2 453 466**
**FR - A - 2 137 834**
**FR - A - 2 306 108**
**FR - A - 2 308 529**

(73) Patentinhaber: **WABCO Westinghouse
Fahrzeugbremsen GmbH, Am Lindener
Hafen 21 Postfach 91 12 80, D-3000 Hannover 91 (DE)**

(72) Erfinder: **Schlamann, Wilhelm, Dipl.-Ing., Fuchsklint 12,
D-3004 Isernhagen 1 (DE)**
Erfinder: **Feldmann, Joachim, Auf dem Papenberg 8,
D-3057 Neustadt 2 (DE)**

(74) Vertreter: **Schrödter, Manfred, WABCO Westinghouse
Fahrzeugbremsen GmbH Am Lindener
Hafen 21 Postfach 91 12 80, D-3000 Hannover 91 (DE)**

ACTORUM AG

## Beschreibung

Die Erfindung betrifft einen Bremskreis mit mit pneumatisch betätigbaren Bremszylindern ausgerüsteten Radbremsen einer wenigstens diesen Bremskreis enthaltenden Bremsanlage gemäss dem Oberbegriff des Patentanspruchs 1.

Bremsanlagen in Nutzfahrzeugen arbeiten in der Regel mit einem Anlagendruck von ca. 7 bis 8 bar. Bei solchen Bremsanlagen in Omnibussen und schweren Nutzfahrzeugen kann es wiederholt zu Platzproblemen wegen der notwendigen Behälter- und Bremszylindervolumen kommen. Deshalb wurden Hochdruck-Bremsanlagen entwickelt, die mit wesentlich höheren Anlagendrücken arbeiten.

Eine derartige gattungsgemässe Bremsanlage mit einem Hochdruck-Versorgungskreis ist aus der DE-A-2 124 027 bekannt. Diese Bremsanlage besitzt einen Versorgungskreis, dessen Vorratsbehälter mit einem Druck von 20 bar befüllt werden. Sie enthält auch Steuer- und Bremskreise, die mit Niederdruck von 9 bar arbeiten. Dazu sind in den Versorgungsleitungen hinter den Vorratsbehältern in Richtung der Fahrzeugbremsen Druckbegrenzungsmittel eingeschaltet, die den Behälterdruck entsprechend reduzieren.

Die Bremsanlage verfügt auch über einen Hinterachsbremskreis, dessen Bremszylinder der Radbremsen über ein Relaisventil ansteuerbar sind. Das Relaisventil wird durch ein Motorwagen-Bremsventil mit einem Steuerdruck von maximal 9 bar angesteuert. Dabei ist der Vorratsanschluss des Relaisventils mit dem Hochdruck-Versorgungskreis verbunden. Dies hat den Zweck, eine gewisse Voreilung der weiter entfernt liegenden Hinterachsbremszylinder zu erreichen. Allerdings handelt es sich ansonsten um ein gebräuchliches Relaisventil, das über ein Druckübersetzungsverhältnis von 1 : 1 verfügt. Durch das Relaisventil ist daher auch nur ein Vollbremsdruck von maximal 9 bar in die Bremszylinder des Bremskreises einsteuerbar.

Bei dem bekannten Bremskreis handelt es sich deshalb lediglich um einen Bremskreis mit Hochdruckspeicherung, der einen entscheidenen Vorteil eines Hochdruck-Bremskreises, nämlich die Ausnutzung der höheren Zuspannkräfte bei gleichen Bremszylinderabmessungen, nicht zu erreichen vermag.

Der Erfindung liegt deshalb die Ausgabe zugrunde, einen Bremskreis der eingangs genannten Art mit einfachen Mitteln derart zu verbessern, dass er die Gewinnung höherer Zuspannkräfte sicherstellt.

Diese Aufgabe wird durch die in Patentanspruch 1 angegebene Erfindung gelöst. Weiterbildungen und vorteilhafte Ausführungsbeispiele der Erfindung sind in den Unteransprüchen angegeben.

Die Erfindung weist insbesondere den Vorteil auf, dass mit diesem Bremskreis auch bei kleineren Bremszylinderabmessungen höhere Zuspannkräfte an den Radbremsen erreichbar sind, wie es z.B. bei der Realisierbarkeit einer Vollscheibenbremsanlage gefordert wird.

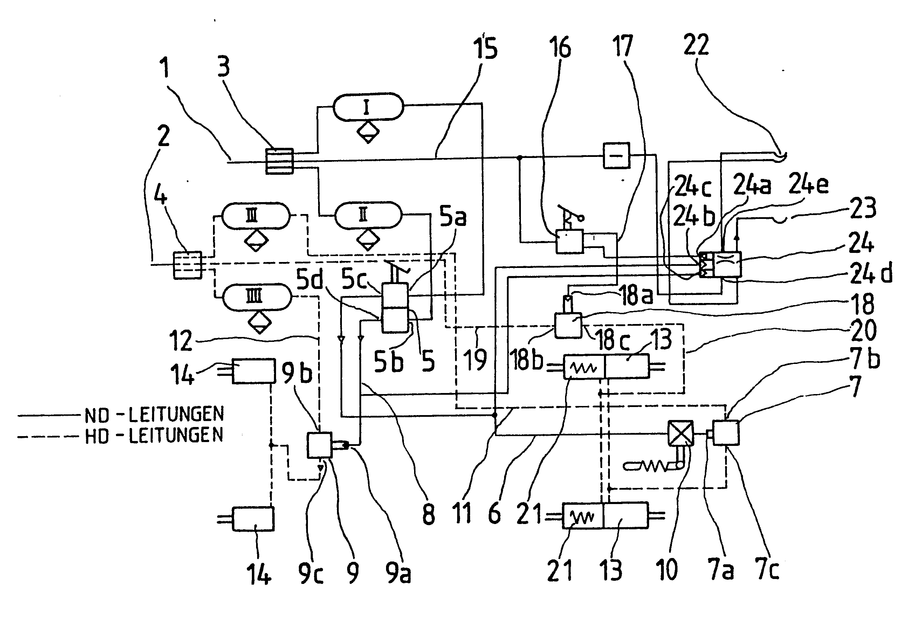

Die Erfindung wird nachfolgend anhand des in der Zeichnung dargestellten Ausführungsbeispiels näher erläutert.

Die Zeichnung stellt eine pneumatische Kraftfahrzeugbremsanlage dar, welche aus zwei Bremskreisen und aus einem Federspeicher-Hilfs- oder Feststellbremskreis besteht. Ausserdem verfügt die Anlage über einen pneumatischen Zweileitungs-Anhängerbremsanschluss.

Der Drucklufterzeugerkreis besteht aus einem Niederdruck-Versorgungsteil, der die Anlage über eine Leitung 1 speist und aus einem Hochdruck-Versorgungsteil, dessen Speisung über eine Leitung 2 erfolgt.

Der Niederdruck-Versorgungsteil mit Behältern I und II wird über ein erstes Zweikreis-Schutzventil 3, der Hochdruck-Versorgungsteil mit Behältern III und IV über ein zweites Zweikreis-Schutzventil 4 gesichert. Ein dem Steuerkreis der Bremsanlage zugeordnetes Zweikreis-Bremsventil 5 ist mit Einlassanschlüssen 5a, 5b mit den Niederdruck-Vorratsbehältern I, II verbunden. Das Zweikreis-Bremsventil 5 verfügt über zwei Auslassanschlüsse 5c, 5d, wobei der erste Auslassanschluss 5c über eine Leitung 6 mit dem Niederdruck-Steueranschluss 7a eines dem Hinterachsbremskreis zugeordneten ersten Relaisventils 7 in Verbindung steht und der zweite Auslassanschluss 5d über eine Leitung 8 eine Verbindung mit dem Niederdruck-Steueranschluss 9a eines dem Vorderachsbremskreis zugeordneten zweiten Relaisventils 9 herstellt. Gemäss dem hier aufgezeigten Ausführungsbeispiel ist der Hinterachsbremskreis lastabhängig geregelt, indem in die vom ersten Auslassanschluss 5c des Zweikreis-Bremsventils 5 zum Niederdruck-Steueranschluss 7a des ersten Relaisventils 7 führende Leitung 6 eine lastabhängige Bremskraftregeleinrichtung 10 geschaltet ist. Im Steuerkreis der Bremsanlage herrscht also nur der vom Niederdruckteil der Drucklufterzeugeranlage entnommene Niederdruck.

Das erste und das zweite Relaisventil 7, 9 besitzen jeweils einen Hochdruck-Vorratsanschluss 7b, 9b, deren Beaufschlagung aus dem Hochdruck-Versorgungsteil der Drucklufterzeugeranlage erfolgt. Zu diesem Zweck ist der Hochdruck-Vorratsanschluss 7b des ersten Relaisventils 7 über eine Leitung 11 mit dem Hochdruck-Vorratsbehälter III und der entsprechende Anschluss 9b des zweiten Relaisventils 9 über eine Leitung 12 mit dem Hochdruck-Vorratsbehälter IV verbunden. Die als Hochdruck-Bremsanschlüsse 7c und 9c ausgebildeten Auslässe der Relaisventile 7 und 9 stellen die jeweilige Verbindung mit den Bremszylindern 13 der Hinterachse bzw. mit den Bremszylindern 14 der Vorderachse her.

Der Steuerkreis der Hilfs- oder Feststellbremsanlage führt von dem dem Niederdruck-Versorgungsteil der Drucklufterzeugeranlage zugeordneten Dreikreis-Schutzventil 13 über eine Leitung 15, ein Handbremsventil 16 und eine Leitung 18 zum Niederdruck-Steueranschluss 18a eines dritten Relaisventils 18. Der Hochdruck-Vorratsanschluss 18b des dritten Relaisventils 18 ist über eine Leitung 19 mit dem dem Hochdruck-Versorgungsteil der Drucklufterzeugeranlage zugeordneten Dreikreis-Schutzventil 4 verbunden und der als Hochdruck-Bremsanschluss 18c ausgebildete Auslass des Relaisventils 18 stellt über eine Leitung 20 eine Verbindung mit den an der Hinterachse angeordneten Federspeicherzylindern 21 des Hilfs- oder Feststellbremskreises her.

Der Zweileitungs-Anhängerbremsanschluss besteht aus einer Vorratskupplung 22 und einer Bremskupplung 23. Sowohl die Vorratskupplung 22 als auch die Bremskupplung 23 werden mit dem niedrigen Druck des Niederdruck-Versorgungsteils der Drucklufterzeugeranlage bzw. dem gleichfalls niedrigen Druck des Steuerkreises der Fahrzeugbremsanlage belüftet, wobei das Zweikreis-Bremsventil 5 und das Handbremsventil 16 als Steuereinrichtungen dienen, während ein Anhänger-Steuerventil 24 das Verbindungsglied dieser Einrichtung mit den Kupplungen 22, 23 darstellt.

Die Funktion ist wie folgt:

1. Bremsanlage

Beim Betätigen des Zweikreis-Bremsventils 5 strömt die an den Anschlüssen 5a und 5b anstehende Druckluft der Niederdruck-Vorratsbehälter I und II über die Anschlüsse 5c und 5d zu den Niederdruck-Steueranschlüssen 7a und 9a der Relaisventile 7 und 9. Die Relaisventile 7 und 9 öffnen im Verhältnis zur Grösse des Steuerdruckes und die an den Hochdruck-Vorratsanschlüssen 7b und 9b anstehende Druckluft aus den Hochdruck-Vorratsbehältern III, IV stömt über die Hochdruck-Bremsanschlüsse 7c und 9c in die Betriebsbremszylinder 13 und 14. Die dem Relaisventil 7 vorgeschaltete lastabhängige Druckregelventileinrichtung 10 regelt den Steuerdruck entsprechend dem Fahrzeuggewicht.

2. Hilfs- oder Feststeilbremsanlage

Beim Betätigen des Handbremsventils 16 strömt die aus dem Niederdruck-Versorgungsteil der Druckerzeugeranlage über die Leitung 15 anstehende Druckluft zu dem Niederdruck-Steueranschluss 18a des Relaisventils 18. Das Relaisventil 18 öffnet und die über den Hochdruck-Vorratsanschluss 18b von dem Hochdruck-Versorgungsteil der Drucklufterzeugeranlage kommende, über den Hochdruck-Bremsanschluss 18c in den Federspeicherzylindern 21 anstehende Druckluft wird entlüftet, so dass die Spannkraft der Federelemente der Federspeicherzylinder 21 eine Bremsung auslöst. Zum Lösen der Federspeicherbremse müssen die Leitungen 19, 20 durch die Funktion des Relaisventils 18 durch Betätigung des Handbremsventils 16 wieder belüftet werden, um die Spannkraft der Federelemente der Federspeicherzylinder 21 wieder aufzuheben.

3. Anhänger-Bremsanlage

Die Betätigung der Anhänger-Bremsanlage wird sowohl durch die Betätigung des Zweikreis-Bremsventils 5 als auch durch die Betätigung des Handbremsventils 16 über das Anhänger-Steuerventil 24 und die Bremskupplung 23 gesteuert. Das Anhänger-Steuerventil 24 verfügt hierfür über Steueranschlüsse 24b, 24c für die Ansteuerung aus den beiden Betriebsbremskreisen des Zweikreis-Bremsventils 5 und ein Steueranschluss 24a für die Ansteuerung vom Handbremsventil 16. Die Vorratsleitung 15 verläuft durch das Anhänger-Steuerventil 24 über dessen Anschlüsse 24d und 24e zur Vorratskupplung 22.

**Patentansprüche**

1. Bremskreis mit mit pneumatisch betätigbaren Bremszylindern (13, 14, 21) ausgerüsteten Radbremsen einer wenigstens diesen Bremskreis enthaltenden Bremsanlage mit folgenden Merkmalen:

a) der Bremskreis weist wenigstens einen Hochdruck-Versorgungsteil (4, 11; 4, 12; 4, 19) mit Hochdruckregler auf;

b) es ist ein Relaisventil (7, 9, 18) vorgesehen, das an seinem Vorratsanschluss (7b, 9b, 18b) mit dem Hochdruck-Versorgungsteil und an seinem Auslass (7c, 9c, 18c) mit den Radbremsen verbunden ist;

c) das Relaisventil (7, 9, 18) verfügt über einen Niederdruck-Steueranschluss (7a, 9a, 18a);

d) der Bremskreis weist wenigstens einen Niederdruck-Versorgungsteil (3, 6; 3, 8; 3, 15; 3, 17) auf;

e) der Niederdruck-Steueranschluss (7a, 9a, 18a) des Relaisventils (7, 9, 18) ist mit dem Niederdruck-Versorgungsteil verbindbar; gekennzeichnet durch folgende Merkmale:

f) das Relaisventil (7, 9, 18) ist derart ausgebildet, dass es einen im Verhältnis des Hochdrucks zum Niederdruck gegenüber dem Steuerdruck erhöhten Druck an seinem Auslass (7c, 9c, 18c) aussteuert;

g) der Niederdruck-Versorgungsteil (3, 6; 3, 8; 3, 15; 3, 17) weist einen eigenen Druckregler auf.

2. Bremskreis nach Anspruch 1, dadurch gekennzeichnet, dass für den Hochdruck-Versorgungsteil (4, 11; 4, 12; 4, 19) und den Niederdruck-Versorgungsteil (3, 6; 3, 8; 3, 15) mindestens ein Erzeugerkreis vorgesehen ist, in dessen Versorgungsleitung zu jeweils zwei Vorratsbehältern (I, II; III, IV) jeweils eines Versorgungsteils ein Mehrwegeventil (3; 4) geschaltet ist.

3. Bremsanlage mit mindestens zwei Bremskreisen nach Anspruch 1 oder 2, gekennzeichnet durch folgende Merkmale:

a) die Trennung und Steuerung der Bremskreise erfolgt mittels eines in einem Steuerkreis angeordneten Zweikreis-Bremsventils (5);

b) zur Ansteuerung des Zweikreis-Bremsventils (5) bestehen getrennte Verbindungen mit dem Niederdruck-Versorgungsteil (3);

c) der mehrkreisig ausgesteuerte Druck des Zweikreis-Bremsventils (5) dient der Ansteuerung der den jeweiligen Bremskreisen zugeordneten Relaisventile (7, 9) über deren Niederdruck-Steueranschlüsse (7a, 9a);

d) die Vorratsanschlüsse (7b, 9b) der Relaisventile (7, 9) sind jeweils mit dem Hochdruck-Versorgungsteil (4, 11; 4, 12) verbunden;

e) die Auslässe (7c, 9c) der Relaisventile (7, 9) sind mit den jeweiligen Radbremszylindern (14, 15) der den getrennten Bremskreisen zugehörigen Fahrzeugachsen verbunden.

4. Bremsanlage nach Anspruch 3, gekennzeichnet durch folgende Merkmale:

a) die Bremsanlage verfügt über einen Hilfs- oder Feststellbremskreis;

b) die Steuerung des Hilfs- oder Feststellbremskreises erfolgt mittels eines im Niederdruck-Steuerkreis angeordneten Handbremsventils (16);

c) zur Ansteuerung des Handbremsventils (16) besteht eine Verbindung mit dem Niederdruck-Versorgungsteil (3);

d) der ausgesteuerte Druck des Handbremsventils (16) dient der Ansteuerung des dem Hilfs- oder Feststellbremskreis zugeordneten Relaisventils (18) über dessen Niederdruck-Steueranschluss (18a);

e) der Auslass (18b) des Relaisventils (18) ist mit dem Hochdruck-Versorgungsteil (4) verbunden;

f) der Auslass (18c) des Relaisventils (18) ist mit den Hilfs- oder Feststellbremszylindern mindestens einer Fahrzeugachse verbunden.

5. Bremsanlage nach Anspruch 3 oder 4, gekennzeichnet durch folgende Merkmale:

a) die Bremsanlage verfügt über einen Anhänger-Steuerkreis für eine Anhänger-Bremsanlage;

b) die Steuerung der Anhänger-Bremsanlage erfolgt mittels eines im Anhänger-Steuerkreis angeordneten Anhänger-Steuerventils (24);

c) die Ansteuerung des Anhänger-Steuerventils (24) erfolgt vom Niederdruck-Steuerkreis;

d) die Beaufschlagung eines Vorratsanschlusses (24d) des Anhänger-Steuerventils (24) erfolgt mit dem Druck des Niederdruck-Versorgungsteils (3);

e) der vom Anhänger-Steuerventil (24) in die Anhänger-Steuerleitung (23) ausgesteuerte Druck dient der Steuerung des in der Anhänger-Bremsanlage angeordneten Anhänger-Bremsventils.

6. Bremsanlage nach wenigstens einem der vorhergehenden Ansprüche, dadurch gekennzeichnet, dass in die Steuerleitung (6) zwischen dem Zweikreis-Bremsventil (5) und dem Relaisventil (7) eine lastabhängige Bremskraftregeleinrichtung (10) geschaltet ist.

7. Bremsanlage nach Anspruch 6, dadurch gekennzeichnet, dass das Relaisventil (7) und die Bremskraftregeleinrichtung (10) zusammengeschaltet und in einem gemeinsamen Gehäuse angeordnet sind.

8. Bremsanlage nach wenigstens einem der vorhergehenden Ansprüche, dadurch gekennzeichnet, dass das Zweikreis-Bremsventil (5), das Relaisventil (7) und die Bremskraftregeleinrichtung (10) zusammengeschaltet und in einem gemeinsamen Gehäuse angeordnet sind.

9. Bremsanlage nach wenigstens einem der vorhergehenden Ansprüche, dadurch gekennzeichnet, dass das Zweikreis-Bremsventil (5) und das Relaisventil (7) zusammengeschaltet und in einem gemeinsamen Gehäuse angeordnet sind.

10. Bremsanlage nach Anspruch 4, dadurch gekennzeichnet, dass die Druckbeaufschlagung der Hilfs- oder Feststellbremszylinder (21) mit dem vom Handbremsventil (16) ausgesteuerten Niederdruck des Niederdruck-Versorgungsteils (3) erfolgt.

**Claims**

1. Brake circuit having wheel brakes, equipped with pneumatically actuated brake cylinders (13, 14, 21), of a brake system containing at least this brake circuit, having the following features;

a) the brake circuit has at least one high-pressure supply section (4, 11; 4, 12; 4, 19) with high-pressure regulator;

b) a relay valve (7, 9, 18) is provided which is connected at its supply connection (7b, 9b, 18b) to the high-pressure supply section and at its port (7c, 9c, 18c) to the wheel brakes;

c) the relay valve (7, 9, 18) has available a low pressure control connection (7a, 9a, 18a);

d) the brake circuit has at least one low pressure supply section (3, 6; 3, 8; 3, 15; 3, 17);

e) the low pressure control connection (7a, 9a, 18a) of the relay valve (7, 9, 18) can be connected to the low pressure supply section;

characterised by the following features:

f) the relay valve (7, 9, 18) is so constructed that it supplies at its port (7c, 9c, 18c) a pressure which is increased with respect to the control pressure in the ratio of the high pressure to the low pressure;

g) the low pressure supply section (3, 6; 3, 8; 3, 15; 3, 17) has its own pressure regulator.

2. Brake circuit according to Claim 1, characterised in that for the high pressure supply section (4, 11; 4, 12; 4, 19) and the low pressure supply section (3, 6; 3, 8; 3, 15) at least one generator circuit is provided having a multi-way valve (3, 4) connected in each case into its supply line to two reservoirs (I, II; III, IV) for each supply section.

3. Brake system having at least two brake circuits according to Claim 1 or 2, characterised by the following features:

a) the brake circuits are separated and controlled by means of a dual-circuit brake valve (5) arranged in a control circuit;

b) for operation of the dual-circuit brake valve (5) there are separate connections to the low pressure supply section (3);

c) the pressure, controlled in the several circuits, from the dual circuit brake valve (5) serves to operate the relay valves (7, 9) associated with the respective brake circuits, by way of their low pressure control connections (7a, 9a);

d) the supply connections (7b, 9b) of the relay valves (7, 9) are connected in each case to the high pressure supply section (4, 11; 4, 12);

e) the ports (7c, 9c) of the relay valves (7, 9) are connected to the respective wheel brake cylinders (14, 15) of the vehicle axles belonging to the separate brake circuits.

4. Brake system according to Claim 3, characterised by the following features:

a) the brake system has available an auxiliary or parking brake circuit;

b) the auxiliary or parking brake circuit is controlled by means of a hand-brake valve (16) arranged in the low pressure control circuit;

c) for energising the hand-brake valve (16) there is a connection to the low pressure supply section (3);

d) the controlled pressure of the hand-brake valve (16) serves to operate the relay valve (18), associated with the auxiliary or parking brake circuit, by way of the low pressure control connection (18a) of the relay valve;

e) the port (18b) of the relay valve (18) is connected to the high pressure supply section (4);

f) the port (18c) of the relay valve (18) is connected to the auxiliary or parking brake cylinders of at least one vehicle axle.

5. Brake system according to Claim 3 or 4, characterised by the following features:

a) the brake system has available a trailer control circuit for a trailer brake system;

b) the trailer brake system is controlled by means of a trailer control valve (24) arranged in the trailer control circuit;

c) the trailer control valve (24) is operated by the low pressure control circuit;

d) a supply connection (24d) of the trailer control valve (24) is supplied with the pressure of the low pressure supply section (3);

e) the pressure supplied by the trailer control valve (24) to the trailer control line (23) serves to control the trailer brake valve arranged in the trailer brake system.

6. Brake system according to at least one of the preceding Claims, characterised in that a load-controlled braking force regulating device (10) is connected into the control line (6) between the dual-circuit brake valve (5) and the relay valve (7).

7. Brake system according to Claim 6, characterised in that the relay valve (7) and the braking force regulating device (10) are interconnected and arranged in a common housing.

8. Brake system according to at least one of the preceding Claims, characterised in that the dual-circuit brake valve (5), the relay valve (7) and the braking force regulating device (10) are interconnected and arranged in a common housing.

9. Brake system according to at least one of the preceding Claims, characterised in that the dual-circuit brake valve (5) and the relay valve (7) are interconnected and arranged in a common housing.

10. Brake system according to Claim 4, characterised in that the auxiliary or parking brake cylinder (21) is supplied with the low pressure, of the low pressure supply section (3), under the control of the handbrake valve (16).

**Revendications**

1. Circuit de freinage avec freins de roues équipés de cylindres de frein (13, 14, 21) actionnables pneumatiquement, ces freins appartenant à une installation de freinage comportant au moins ce circuit de freinage, avec les caractéristiques suivantes:

a) le circuit de freinage présente au moins une partie alimentation haute pression (4, 11; 4, 12; 4, 19) avec régulateur haute pression;

b) il est prévu une vanne-relais (7, 9, 18) qui, à son raccord de réserve (7b, 9b, 18b), est reliée à la partie alimentation haute pression et qui, à sa sortie (7c, 9c, 18c), est reliée aux freins de roues;

c) la vanne-relais (7, 9, 18) dispose d'un raccord de commande basse pression (7a, 9a, 18a);

d) le circuit de freinage présente au moins une partie alimentation basse pression (3, 6; 3, 8; 3, 15; 3, 17);

e) le raccord de commande basse pression (7a, 9a, 18a) de la vanne-relais (7, 9, 18) est apte à être relié à la partie alimentation basse pression; caractérisé par les caractéristiques suivantes:

f) la vanne-relais (7, 9, 18) est constituée de façon à moduler à sa sortie (7c, 9c, 18c) une pression accrue par rapport à la pression de commande, dans le rapport de la haute pression à la basse pression;

g) la partie alimentation basse pression (3, 6; 3, 8; 3, 15; 3, 17) présente un régulateur de pression.

2. Circuit de freinage selon revendication 1, caractérisé par le fait qu'il est prévu, pour la partie alimentation haute pression (4, 11; 4, 12; 4, 19) et pour la partie alimentation basse pression (3, 6; 3, 8; 3, 15), au moins un circuit générateur dans la conduite d'alimentation duquel, allant à chaque fois à deux réservoirs (I, II; III, IV) appartenant à chaque fois à une partie alimentation, est disposée une vanne à plusieurs voies (3; 4).

3. Installation de freinage avec au moins deux circuits de freinage selon revendication 1 ou 2, caractérisé par les caractéristiques suivantes:

a) la séparation et la commande des circuits de freinage s'effectuent au moyen d'une vanne de freinage (5) à deux circuits agencée dans un circuit de commande;

b) pour la commande de la vanne de freinage à deux circuits (5), il y a des liaisons séparées à la partie alimentation basse pression (3);

c) la pression de la vanne de freinage (5) à deux circuits, modulée selon plusieurs circuits, sert à commander les vannes-relais (7, 9) associées aux circuits de freins concernés, cela via les raccords de commande basse pression (7a, 9a) de ces vannes-relais;

d) les raccords de réserve (7b, 9b) des vannes-relais (7, 9) sont reliés à chaque fois à la partie alimentation haute pression (4, 11; 4, 12);

e) les sorties (7c, 9c) des vannes-relais (7, 9) sont reliées aux cylindres concernés (14, 15) des freins de roues d'essieux du véhicule affectés aux circuits de freinage séparés.

4. Installation de freinage selon revendication 3, caractérisée par les caractéristiques suivantes:

a) l'installation de freinage dispose d'un circuit d'assistance de freinage ou de freinage d'immobilisation;

b) la commande du circuit d'assistance de freinage ou de freinage d'immobilisation s'effectue au moyen d'une vanne de frein à main (16) agencée dans le circuit de commande basse pression;

c) il y a une liaison à la partie alimentation basse pression (3), pour la commande de la vanne de frein à main (16);

d) la pression modulée de la vanne de frein à main (16) sert à commander la vanne-relais (18) associée au circuit d'assistance de freinage ou de freinage d'immobilisation, via le raccord de commande basse pression (18a) de celle-ci;

e) la sortie (18b) de la vanne-relais (18) est reliée à la partie alimentation haute pression (4);

f) la sortie (18c) de la vanne-relais (18) est reliée aux cylindres d'assistance de freinage ou de freinage d'immobilisation d'au moins un essieu du véhicule.

5. Installation de freinage selon revendication 3 ou 4, caractérisée par les caractéristiques suivantes:

a) l'installation de freinage dispose d'un circuit de commande de remorque pour une installation de freinage de remorque;

b) la commande de l'installation de freinage de remorque s'effectue au moyen d'une vanne de commande de remorque (24) agencée dans le circuit de commande de remorque;

c) la commande de la vanne de commande de remorque (24) est effectuée par le circuit de commande basse pression;

d) l'alimentation d'un raccord de réserve (24d) de la vanne de commande de remorque (24) s'effectue avec la pression de la partie alimentation basse pression (3);

e) la pression dans la conduite de commande de remorque (23), modulée par la vanne de commande de remorque (24), sert à la commande de la vanne de freinage de remorque agencée dans l'installation de freinage de remorque.

6. Installation de freinage selon au moins l'une des revendications précédentes, caractérisée par le fait qu'un dispositif (10) de réglage de force de freinage en fonction de la charge est disposé sur la conduite de commande (6), entre la vanne (5) de freinage à deux circuits et la vanne-relais (7).

7. Installation de freinage selon revendication 6, caractérisée par le fait que la vanne-relais (7) et le dispositif de réglage de force de freinage (10) sont interconnectés et agencés dans un boîtier commun.

8. Installation de freinage selon au moins l'une des revendications précédentes, caractérisée par le fait que la vanne de freinage (5) à deux circuits, la vanne-relais (7) et le dispositif de réglage de force de freinage (10) sont interconnectés et agencés dans un boîtier commun.

9. Installation de freinage selon au moins l'une des revendications précédentes, caractérisée par le fait que la vanne de freinage (5) à deux circuits et la vanne-relais (7) sont interconnectées et agencées dans un boîtier commun.

10. Installation de freinage selon revendication 4, caractérisée par le fait que l'alimentation du cylindre (21) d'assistance de freinage ou de freinage d'immobilisation s'effectue avec la basse pression de la partie alimentation basse pression (3), modulée par la vanne de frein à main (16).

ND – LEITUNGEN
HD – LEITUNGEN

0 104 312